# EUROPEAN PATENT APPLICATION

(11) **EP 4 793 727 A1**
(43) Date of publication of application: **19.08.2026**
(21) Application number: 25157643.5
(22) Date of filing: 13.02.2025
(51) Int. Cl.: G05B 23/02, G06N 3/045, G06N 3/08

(54) **A COMPUTER-IMPLEMENTED METHOD FOR REVISING A MACHINE LEARNING MODEL FOR AN INDUSTRIAL PROCESS PLANT**

(71) Applicant: ABB SCHWEIZ AG, 5400 Baden (CH)
(72) Inventor: MADUSKAR, Deepti, 462042 Bhopal (IN); BORRISON, Reuben, 68782 Brühl (DE); SHARMA, Divyasheel, 560048 Bangalore, Karnataka (IN); K R, Chandrika, 560078 Bangalore (IN); MANCA, Gianluca, 80935 München (DE); DIX, Marcel, 78476 Allensbach (DE); NAKAS, Georgios, 68161 Mannheim (DE)
(74) Representative: Maiwald GmbH

(57) **Abstract**

The disclosure relates to a computer-implemented method, comprising:
- obtaining training data (2) from an operation of an industrial process plant;
- training, using the training data (2), a machine learning model (1) for assisting a plant operation of the industrial process plant;
- determining several sub-populations (3) in the training data (2), each one of the sub-populations (3) relating to a different scenario of an operation of the industrial process plant;
- determining several performances of the machine learning model (1), each one of the performances relating to a different sub-population (3);
- determining, based on the performance of each one of the sub-populations (3), one or more underrepresented sub-populations (4), which are underrepresented in the training data (2) compared to other sub-populations (3) in the several sub-populations (3); and
- revising, based on the one or more underrepresented sub-populations (4), the machine learning model (1) for increased consideration of the one or more underrepresented sub-populations (3) when assisting the plant operation of the industrial process plant.

## Description

### TECHNICAL FIELD

The present invention relates to a computer-implemented method for revising a machine learning model for increased consideration of underrepresented sub-populations in training data from an operation of an industrial process plant, one or more computer program products, a data processing system, and a plant operation system for an industrial process plant.

### BACKGROUND

Plant operation systems for industrial process plants include a combination of hardware and software for a wide range of applications of industrial plants. These applications include but are not limited to mining extraction, transportation and processing, chemical manufacturing plants, water and wastewater treatment, electric power generation plants, and pharmaceutical processing facilities. The used plant operation systems are generally engineered to oversee and manage industrial equipment and processes for the specific application.

The operation of these industrial process plants is typically done through the plant operation system as control interface of one or more plant operators, typically engineers or technicians, who are currently on duty to control or supervise the operation of the industrial process plant.

Today, the plant operation systems are known to employ machine learning models for assisting a plant operator in the plant operation of the industrial process plant, specifically in the control and/or supervision of the operatin of the industrial process plant. These machine learning models may be employed for different kinds of assistance of the plant operators. For example, during plant operation, errors can occur, e.g., within one or more industrial equipments. For example, the machine learning model may be used to determine the severity of such error, whether it occurred previously, give explanations to the plant operator on how to solve the error, determine whether the error is actually an error or an anomaly, and many more. Another example in which a machine learning model may be used is for example the prediction of a quality of an output from the industrial process plant, e.g. in batch processing of goods such as paints. Here, during different seasons and due to different materials, the quality of the different batches may be affected and there may be different issues present, where the machine learning model can assist the plant operator analyzing huge amounts of data.

### SUMMARY

One potential issue when building such machine learning models may be the use of imbalanced training data, which is a common scenario in industrial machine learning or artificial intelligence applications (note that the terms machine learning and artificial intelligence can be understood and are used herein interchangeably). With these, there is a possibility that the machine learning model may not learn the underlying semantics of modes or, in other words, scenarios that are underrepresented in the imbalanced training data.

Specifically, it has been found that in an industrial process plant, the highly changing dynamics make it difficult to capture sufficient data (to be used for the training of the machine learning model) pertaining to all the modes or scenarios of the industrial process plant. For example, the data captured while a fault has been incurred in the industrial process plant will always be less compared to the data captured during the normal operational working of the industrial process plant. Thus, when building machine learning models using this data, there is a possibility that the model may not learn the underlying semantics of those scenarios which are under-represented. Another example is information on different batch runs for white paint productions by an industrial process plant. There could be data available from different paint runs but one may overlook the type of input material used in each run. This can cause the model to overlook at certain runs where quality was inferior due to the inferior raw input material quality. But as this information was not directly available in the data, the model may perform sub adequately when such a data comes to it.

Since the model is accordingly unable to learn the semantics of the underrepresented data, its performance will degrade whenever this or a similar scenario is encountered in the industrial process plant. This leads to wrong outputs when the model is put into the production environment of the industrial process plant, leading to poor quality of service and losing customer trust on the model. Thus, there is a need to have machine learning models for assisting plant operators in the operation of industrial process plants, which are robust towards the underrepresented data and hence perform sufficiently good on the majority of the scenarios of operations of the industrial process plant.

The above problem or need is at least partially solved or alleviated by the subject matters of the independent claims of the present disclosure, wherein further examples are incorporated in the dependent claims.

According to an aspect of the present disclosure, there is provided a computer-implemented method, comprising:
obtaining training data from an operation of an industrial process plant;
- training, using the training data, a machine learning model for assisting a plant operation of the industrial process plant, in particular but not limited to assisting a plant operator in the plant operation of the industrial process plant;
- determining several sub-populations in the training data, each one of the sub-populations relating to a different scenario of an operation, in particular of a similar operation, of the industrial process plant;
- determining several performances of the machine learning model, each one of the performances relating to a different sub-populations;
- determining, based on the performance of each one of the sub-populations, one or more underrepresented sub-populations, which are underrepresented in the training data compared to other sub-populations in the several sub-populations; and
- revising, based on the one or more underrepresented sub-populations, the machine learning model for increased consideration of the one or more underrepresented sub-populations when assisting the plant operation of the industrial process plant, in particular but not limited to the plant operator.

Accordingly, the method provides for an advantageous revising of a trained machine learning model such that it becomes robust towards the underrepresented data and hence perform sufficiently good on the majority of the scenarios of operations of the industrial process plant.

The terms machine learning model, training data, sub-population, scenario, and performance are herein to be understood broadly. The term training data designates any data from the operation of the industrial process plant, that can be used for training the machine learning model in a general manner or for a specific context in the space of the assisting the plant operator. Examples of such training data are sensor readings or any other form and type of data from technical equipment installed in the industrial process plant, that is collected. For example, the training data may be in any one of and not limited to the types of text, time-series data, images, video, and similar. For example, text from errors issued by the plant operation system, time-series data from sensor readings, and images or videos from a user interface of the plant operation system could be used as training data for training the machine learning model. The machine learning model may be trained by any technique, including but not limited to supervised learning, unsupervised learning, semi-supervised learning, reinforcement learning and others.

The revising of the trained machine learning model may be in the form of any technique to revise the machine learning model, e.g. retraining or fine-tuning. The revising may in particular be carried out automatically, or semi-automatically. In a semi-automatic manner, the plant operation system may require plant operator input for the revision of the machine learning model, e.g. a confirmation, but not limited thereto.

In the training data derived from the operation of the industrial process plant data, sub-populations refer to distinct groupings within the training data that share specific characteristics thay may influence the behavior of the machine learning model trained therewith. These groupings may in particular be in the form of operational and/or contextual groupings. These distinct sub-populations or, in other words, groupings of the data may be determined by using different techniques, e.g. focusing on operational and/or contextual grouping. Examples of such techniques are discussed further below, e.g. statistic techniques.

The sub-populations or groupings generally share a scenario of operation of the industrial process plant, particular but not limited to a similar operation of the industrial plant. Generally, the scenario refers to a specific operational or data distribution configuration, in which sub-population dynamics may critically impact the model performance or reliability. These different scenarios are present in the data due to contextual variations that reflect the real-world operation of the industrial process plant.

An underrepresented sub-population in the industrial training data generally refers to groupings or clusters of data, in particular but not limited to containing specific operational conditions, equipment states, or process variables, that occur infrequently within the dataset compared to dominant patterns. In the industrial process plant context, this may for example involve rare fault conditions (e.g., specific mechanical failures occurring <1% of runtime), extreme environmental parameters (unusual temperature/pressure combinations), or minority product variants with limited production batches. These sub-populations or groupings of data become underrepresented when the data is disproportionately captured during routine operations of the industrial process plant while undersampling edge cases. As discussed herein, this may be a critical issue as the machine learning models may fail to recognize these patterns during deployment, potentially missing critical anomalies, e.g. in quality control or predictive maintenance scenarios.

The performance of a machine learning model generally quantifies how effectively the model generalizes to new industrial data while maintaining operational reliability. It can be measured through task-specific metrics. For example, classification tasks may be used, which use precision-recall tradeoffs to balance false alarms versus missed detections in anomaly identification systems. Another option are regression models, which may employ mean absolute percentage error to quantify deviation in production output forecasts. Further options are cross-validation techniques and advanced monitoring. The method can use any of the aforementioned or any other available technique to determine sub-population specific performances of the machine learning model for each one of the different sub-populations in the determined several performances.

From the performances of the different sub-populations, it can be derived which of these sub-populations are relatively low and relatively high in performance. Typically, the ones with the lower performance can be the ones that are underrepresented in the training data, since the model is not able to perform well with these sub-populations. Accordingly, using the method as described herein, it becomes known which sub-populations are underrepresented and need to be addressed in the training data for training the machine learning model. For this purpose, the machine learning model is revised for increased consideration of these underrepresented sub-populations when fulfilling its task, i.e. assisting the plant operator in the plant operation. For example, as already mentioned, a retraining or fine-tuning of the machine learning model may be done with the underrepresented sub-populations. Other examples for the revision are given further below.

The method of the first aspect may in particular be an at least partially or fully computer implemented method. This means that at least one, multiple or all of the steps of the method may be carried out by a data processing system, which may comprise one or more computers or data processing apparatuses, which may comprise one or more processors and data storages or memories. Different steps may be carried out by the same or by different computers of the data processing system. In particular, the method may be carried out by or on the control system.

Generally, the entire method may be executed on one or more computers, that may be executing or be part of the plant operation system of the industrial process plant. Specifically, the plant operation system may comprise one or more computers, which may also be in a distributed computer environment. Besides hardware, the plant operation system may also have software parts enabling the plant operation system to take control of the industrial plant, e.g. of technical equipment or devices of the industrial plant, such as sensors, actuators, etc. To receive input from the operator, e.g. the operator feedback for the machine learning model, the plant operation system may generally comprise any hardware input means such as but not limited to keyboard, computer mouse, touch display, or similar. Also, to provide any information, data or similar to the operator, e.g. output from the machine learning model, the plant operation system may generally comprise any hardware output means, e.g. one or more screens or displays, speakers, or similar.

Generally, the machine learning model may employ any conventional or specific machine learning technique such as but not limited to anomaly detection, classification, clustering, neural networks and/or similar. Generally, using the training data from the operation of the industrial process plant, the machine learning model may be trained and/or used to enhance industrial plant operations by providing the plant operator or plant operation with intelligent decision-support systems that process complex data patterns even beyond human capability. An example of a machine learning model task is real time process optimization. Here, the machine learning model may analyze multivariate sensor data (e.g. temperature, pressure, flow rates) to dynamically adjust process parameters in the process plant operation. Other alternative or additional examples is using the machine learning model for predictive maintenance, for anomaly detection, for energy and resource management of the industrial process plant, and for digital twin simulation. Generally, the assistance of the plant operator or operation by the machine learning model may be provided in different ways in conjunction with the afore-mentioned examples. For example, the machine learning model may produce outputs on a human-machine-interface of the plant operator system for the plant operator. These outputs may be containing the result of the machine learning model for a specific task that the plant operator requested to be executed or that was executed automatically in view of a certain event, e.g. an alarm. The result may for example but not limited thereto be an explanation, an instruction, or a setting by the machine learning model in the plant operation system for dealing with a certain situation or event, e.g. to solve the issue that has raised the alarm. Another example would be energy and resource management, where the plant operator may want to know certain metrics or analysis of energy and resource usage, which the machine learning model may search or derive in an efficient way. Thereby, the plant operator can be assisted during plant operation, e.g. for solving the issue that raised the alarm or for operating the plant in view of the energy and resource usage. However, in other examples, the plant operation may be directly assisted without having the plant operator in between, e.g. for predictive maintenance planning.

Of course, the method may also comprise executing the machine learning model for assisting the plant operator in the operation or generally the plant operation of the industrial process plant, e.g. on the plant operation system. The execution of the machine learning model may be automatically triggered, e.g. in certain events such as when unusual sensor readings are determined, semi-automatically triggered, e.g. in certain events and confirmation to trigger the model for this event is received based on user input by the plant operator, or manually triggered, e.g. by a user requesting a specific output or analysis from the machine learning model.

The training data may comprises time-series process data indicative of sensor readings from sensors of the industrial process plant. However, the training data is not limited thereto and may additionally or alternatively comprise further data as mentioned herein, e.g. in the form of text, image or video, that may be produced by the plant operation system.

The sub-populations in the time-series process data may be identified by applying one or more statistic techniques onto the time-series process data. For example, a two step procedure as statistic technique may be used for creating the sub-populations or, in other words, sub-population clusters. First, statistical clusters are identified. Second, the statistical clusters are contextualized, e.g. using domain information data, which may be part of or included as part of the training data. Generally, domain information refers to specialized operational knowledge and contextual understanding that informs how data is interpreted, processed, and/or modeled within the specific industrial process plant. This can include explicit technical parameters and/or tacit expertise about equipment, processes, and operational constraints in the industrial process plant. The domain information may in particular be contained in metadata. It may be corresponding to input data such as different raw material, operating conditions, batches, classes, alarms, events, and/or other plant related information. This domain information is usually available in unstructured format such as documents or structured sources such as databases/SAP/quality systems etc. Further and more specific examples on the two-step procedure are given further below.

The training data may further comprise domain information data indicative of events in the operation of the industrial plant. Also, or alternatively, the method may comprise obtaining domain information data. The training data may be further enriched with domain information, in particular as knowledge about further subpopulations which may not be available earlier is gained and models can be tested against these subpopulations. In any case, several sub-populations in the training data may be determined based on the training data and the domain information data. Accordingly, the domain information data, which may be indicative of events such as errors, alarms and similar in the plant operation, is being used for determining the sub-populations. Using such domain information, as also described above, allows to better determine or, in other words, divide the training data as overall population of data into the several sub-populations, using the domain information. Specifically because the domain information refers to specialized operational knowledge and contextual understanding as described above, particulary bot not limited to an indication of events in the operation of the industrial plant, the method can better segment the overall population into the several sub-populations for the different scenarios. For example, in case of using the events included in the domain information, the domain information may specify difficult types of events that may occur in the plant operation, e.g. certain error events, alarm events, or similar. Each one of these events can form a different scenario of operation of the industrial plant, or multiple similar events, e.g. similar in one or more characteristics of plant operation, can be summarized to different scenarios of operation of the industrial plant. Thereby, the different sub-populations can be segmented in a manner that they can be differentiated well from one another to then analyze their performances and consequently their representation in the total population in the training data, specifically whether they are underrepresented or not.

The domain information data may be provided or, in other words, fed into one or more large language models, LLMs, for identifying sub-populations of the industrial process plant. The LLM may be a general LLM for understanding and analyzing any arbitrary text and/or other modalities such as image, video, etc. and/or the LLM may be trained or tuned specifically for the purpose of better understanding and analyzing information, e.g. in text form, contained in the domain information. The LLM thereby allows to extract from the domain information the relevant information, e.g. relating to different events or scenarios of plant operation, which can be used to identify the sub-populations. For example, from the domain information, the LLM could extract by which features the different events or scenarios are typically characterized, e.g. in terms of typical or usual sensor values of sensor readings in the plant operation, to then identify those sub-populations with similar sensor values for each one of the different events or scenarios specified by the domain information. The LLM may in particular be configured as a generative and/or extractive artificial intelligence model. For example, a retriever-reader architecture without generation to extract the information e.g. as text from the domain information data may be used. Generally, the domain information data may be comprising one or more documents, e.g. documentation documents. Thus, the LLM may generate and/or extract content from the domain information, for example.

The several sub-populations in the training data may be determined using the machine learning model or another model, in particular another machine learning model, which overlays the information, in particular over training data, from the identified sub-populations determined based on the one or more statistic techniques and based on the one or more LLMs. Accordingly, the information of identified sub-populations based on both, statistic technique(s) and LLM(s) is overlayed by the model to increase the insight that can be gained into the reasons for a lower model performance of the underrepresented sub-populations.

The revising of the machine learning model may comprise augmenting the training data with synthetic training data for the one or more underrepresented sub-populations and re-training the machine learning model using the augmented training data. Synthetic training data is synthetically generated training data, that is not from a real operation of the industrial process plant, but can for example be simulated or computed based on the underrepresented sub-population to supplement the training data with more sub-populations of the same scenario of operation of the industrial process plant. With the addition of these synthetic sub-populations, the previously underrepresented sub-populations are not underrepresented any more.

Additionally, or alternatively, the revising may comprise selecting a different machine learning model to be trained with the training data for assisting the plant operator in the plant operation or generally the plant operation of the industrial process plant. Accordingly, a different machine learning model, specifically one that is more fitting to better consider the underrepresented sub-populations.

Additionally, or alternatively, the revising may comprise adjusting one or more hyperparameters of the machine learning model and re-training the machine learning model with the adjusted one or more hyperparameters using the training data. Thereby, in a particularly efficient way, a robust machine learning model may be obtained to better consider the underrepresented sub-populations.

Additionally, or alternatively, the revising may comprise selecting a different learning algorithm for training the machine learning model and re-training the machine learning model with the different learning algorithm. Accordingly, instead of using a different machine learning model, a different training algorithm, e.g. specifically one that is more fitting to better consider the underrepresented sub-populations for training of the machine learning model.

The revising of the machine learning model may in particular comprise the augmenting of the training data, if a number of samples in the one or more underrepresented sub-populations is below a sample threshold. Accordingly, a sample threshold may be defined as a minimum number of required (data) samples, e.g. time-series data samples, in the underrepresented sub-populations. If this sample threshold is not met, the augment of the training data may be chosen as one of the several herein discussed examples of revising the machine learning model to increase the amount of data and ultimately re-train the machine learning model with sufficient data samples for one or more of the underrepresented sub-populations.

The revising of the machine learning model may in particular comprise the selecting of a different machine learning model, the adjusting of one or more hyperparameters, and/or the selecting of a different learning algorithm, if a number of samples in the one or more underrepresented sub-populations is above the sample threshold. Specifically, either one or more of the aforementioned examples for revising the machine learning model may be used in case the sample threshold is met.

The synthetic training data may be in particular but not limited thereto generated using a generative adversarial network, GAN, and/or a variational autoencoder, VAE.

The determining of the one or more underrepresented sub-populations may comprise comparing the performances of each one of the sub-populations to a performance threshold and selecting the sub-populations with performances below the performance threshold as the one or more underrepresented sub-populations. Accordingly, in addition or alternatively to a sample threshold, a performance threshold may be used as cut-off for determining which of the several sub-populations is underrepresented and which is not but instead e.g. sufficiently represented or overrepresented.

The method may further comprise: obtaining, by the machine learning model, input from the plant operator, the input being indicative of a false output from the machine learning model. The obtaining of the input may trigger the determining of the several sub-populations in the training data, the determining of the several performances of the machine learning model, the determining of the one or more underrepresented sub-populations, and/or the revising of the machine learning model. Accordingly, the plant operator of the plant operation system may at least partially trigger the method, e.g. when they recognize that they constantly gets false predictions or generally results from the machine learning model since e.g. last month. The method may then be specifically tailored to the input of the plant operator, e.g. the time frame specified by them such that only the data from last month or similar is considered.

Additionally, or alternatively, a machine learning monitoring agent may be used in the method. The agent can analyze the output, e.g. the predicitions from the machine learning model. When the agent sees negative feedbacks or false positives, it can automatically trigger the determining of the several sub-populations in the training data, the determining of the several performances of the machine learning model, the determining of the one or more underrepresented sub-populations, and/or the revising of the machine learning model.

According to a second aspect of this disclosure, there are provided one or more computer program products comprising instructions which, when executed by one or more computers, cause the one or more computers to carry out the method of the first aspect of this disclosure.

The computer program product(s) may be a computer program or computer programs as such, meaning a computer program consisting of or comprising program code to be executed by the computer(s).

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

The data processing system may generally comprise one or more computers.

According to a fourth aspect of this disclosure, there is provided a plant operation system for an industrial process plant, the plant operation system comprising the one or more computer program products of the second aspect of this disclosure or the data processing system of the third aspect of this disclosure.

Generally, the plant operation system of the industrial process plant may be implemented in hardware and software as explained herein. The plant operation system may be executing the steps of the method of the first aspect of this disclosure by means of its one or more computers. In addition to the one or more computer program products and/or computer(s) of the data processing system, the plant operation system may generally comprise plant operator or user input means (e.g., keyboard, mouse, touch display, etc.), output means (e.g., displays, speakers, etc) and/or similar as explained herein to interact with the plant operator, e.g. to output a result from an execution of the machine learning model.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to the Figures:
- Figure 1: shows a perspective view on a plant operation system of an industrial process plant being operated by human plant operators;
- Figure 2: shows a schematic illustration of training data used for training a machine learning model to be used to assist the plant operators in operating the industrial process plant;
- Figure 3: shows a schematic flowchart of a method to be executed by the plant operation system of Fig. 1;
- Figure 4: shows a schematic illustration of statistic techniques used to determine sub-populations in the training data of Fig. 2; and
- Figure 5: shows a schematic illustration of an exemplary flow in which the method of Fig. 3 is applied.
The Figures are schematic only and not true to scale. In principle, identical or like parts, elements and/or steps are provided with identical or like reference numerals in the Figures.

### DETAILED DESCRIPTION OF THE INVENTION

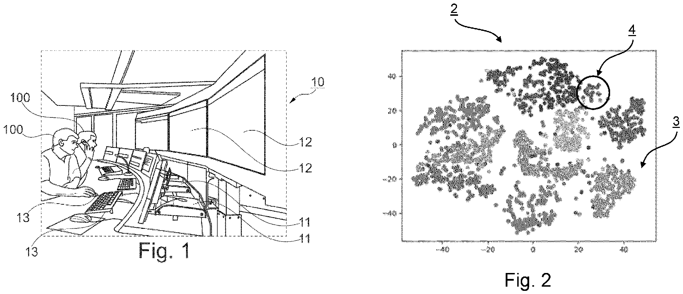

Figure 1 perspectively shows a plant operation system 10 for controlling an industrial process plant. The plant operation system 10 is shown inside a control room, in which two human control operators 100 are shown to operate the plant operation system 10 and thereby control the industrial plant during its operation.

The plant operation system 10 is shown to comprise several computers 11 in this example. Alternatively, the plant operation system 10 may comprise one computer 11 or several spatially distributed computers 11 including cloud computers, servers, edge devices and similar, which may be located inside or outside a space of the industrial plant.

Further, the plant operation system 10 is shown with an operator interface 14 (see Fig. 2), comprising several output means 12 and input means 13. In this example, the output means 12 are exemplary configured as screens or displays and the input means 13 are exemplary configured as keyboards and computer mouses.

The plant operation system 10 may generally be connected via one or more data connections to the industrial plant. The industrial plant may comprise several technical equipments or devices such as but not limited to sensors, actuators and others, that may be collecting data such as sensor measurements. This data may be referred to herein as industrial plant data and be reflecting the operating of the industrial process plant in a given situation or current operation. The industrial plant data may be provided to the plant operation system 10, where these may be evaluated to control the industrial process plant with its technical equipments. Also, the industrial plant data may be at least partially indicated to the plant operators 100 via the output means 12.

For example, there may be cases or scenarios where the industrial plant, specifically one or more of the technical equipments, e.g. a sensor, return data, e.g. in the form of measurement values, which are unusual. In this case, there may be an error or anomaly present. However, it may be difficult to assess whether this is indeed the case.

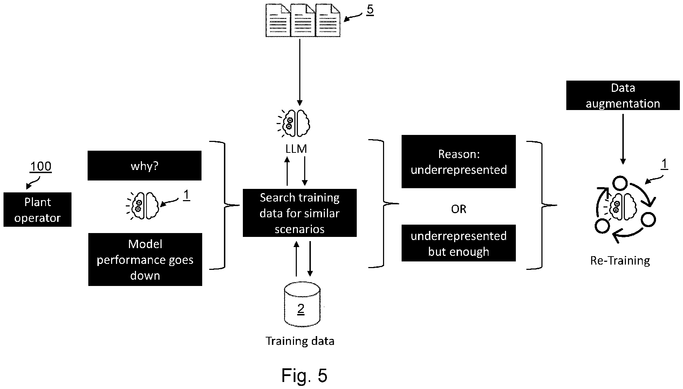

For this purpose, or any other purpose as described herein, the plant operation system 10 may be implemented with a machine learning model 1 (see Fig. 5), which can be executed by the one or more computers 11 to assist the plant operators 100 in the plant operation, e.g. by determining or predicting whether the unusual measurement values are an error or anomaly.

Figure 2 shows a schematic illustration of training data 2 in the form of a point or data cloud. As can be seen from Fig. 2, the training data 2 is herein divided into several sub-populations 3 of data, where each of the sub-populations 3 in the training data relates to a different scenario of an operation of the industrial process plant in the past. Specifically, the training data 2 is based on data that was collected from the previous operation of the industrial process plant and may be collected further during the current time and in the future. For example, such data or generally the training data may include or be in the form of time-series data, specifically from the technical equipments such as sensors and their readings.

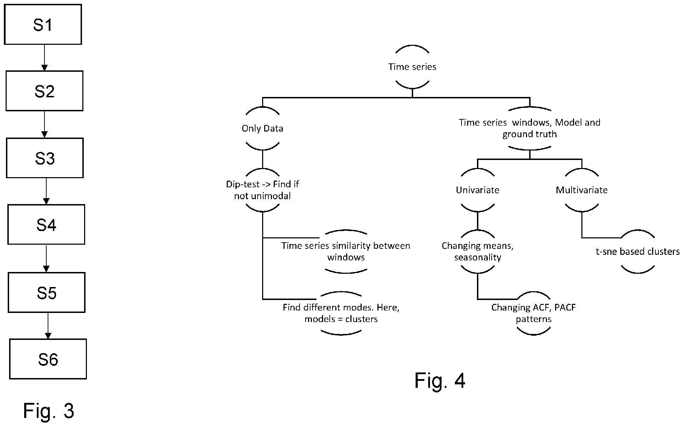

This training data 2 is accordingly being used, e.g. consistently, to train the machine learning model 1. This is shown in the illustrated method of Fig. 3 exemplary as a step S2, which follows the exemplary step S1 of obtaining the training data from the operation of the industrial process plant.

Based on the previous operations, the machine learning model 1 can specifically be trained to learn e.g. from previous unusual measurement values and whether they were errors or anomalies to then, when the situation arises again and a measurement value is unusual, assist the plant operators 100 in determining or predicting whether these are anomalies or errors.

However, as shown in Fig. 2, there may be sub-populations 3, which are underrepresented and are herein referred to as underrepresented sub-populations 4. Because these are underrepresented, the method may not be sufficiently trained for these scenarios of operation and consequently deliver a poor performance when similar scenarios arise during the operation and the plant operators 100 request the machine learning model 1 trained thereon to assist them, e.g. to identify the unusual values as error or anomaly.

Therefore, in a step S3, the method illustrated in Fig. 3 determines the several sub-populations 3 as schematically illustrated in Fig. 2 in the training data. Consequently, in a step S4, the performance of the machine learning model 1 for each one of the different sub-populations 3 or, in other words, different scenarios to which they pertain, is determined. These performances can, in a step S5, be compared to a performance threshold, where the sub-populations 3 associated with performances below the performance threshold are determined as the underrepresented sub-populations 4 from all sub-populations 3 of the training data 2.

In other words, it is possible to check the performance of the model 1 on the different clusters or, in other words, sub-populations 3. First, a performance threshold may be chosen. For example, the performance threshold can be chosen as k times the acceptable performance, where the acceptance performance is given/known beforehand and k is a hyperparameter between (0,1) which can be chosen based on the task. For example, if the task requires low false alarms, k can be high such as 0.7. Else, it can be lower. The clusters for which the performance goes below this threshold can be classified as underrepresented.

Consequently, in a step S6, the machine learning model 1 may be revised in a way such that it considers the one or more determined underrepresented sub-populations 4 in an increased manner. For example, as shown in Fig. 5, data augmentation techniques may be used to revise the machine learning model 1, adding synthetic data as herein described to the training data 2 for re-training the machine learning model 1.

In the illustration of Fig. 4, a detailed statistic technique is shown how the time-series data as an example of the training data 2 can be processed to determine the several sub-populations 3 in the training data 2 as shown in Fig. 2 or, in other words, identify them as clusters or groupings of data relating to the same scenario and/or a similar operation of the industrial process plant.

Specifically, here, a two step procedure for creating the sub-populations 3 or clusters is being used, where first the statistical clusters are identified and second the statistical clusters are contextualized with domain information as shown as domain information data in Fig. 5.

Since time series data has dependence, a criteria-based approach as shown in Fig. 4 may be used to cluster the sub-populations 3. The first criteria may depend on the availability of data and model. If only data is available, the dip test of unimodality may be run on the data. If the data is unimodal, any window-based similarity technique may be used. If the data is multi-modal, it is possible to find different modes or scenarios, where each mode can be called a cluster.

If data and model are available, it is possible to proceed based on whether the data is univariate or multivariate. For univariate, it is possible to check for changing means and seasonality. Different seasons can be categorized into different cluster. After removing the seasonality and changing means, i.e making the data stationary, it is possible to choose different windows of data and compare their correlation structures. If they are significantly different, they can be under different clusters. If the data is multivariate it is possible to use any technique based on dimensionality reduction and clustering.

As shown in the exemplary use case of Fig. 5, the plant operator 100 may be using the model 1 for some application relating to the operation of the industrial process plant, e.g. to identify whether current values that are unusual are an anomaly or an error. The user and/or a software monitoring agent may notice that the model performance is poor for that type of request to the model 1. The plant operator 100 or agent may provide input to the plant operation system 10 essentially asking why this is the case, which is a trigger for executing the method described herein.

Accordingly, as further shown in Fig. 5, the training data may be searched for similar scenarios, meanining for the sub-populations 3 that have a similar scenario of operation. In Fig. 5, an example is illustrated where an LLM is being used and domain information data 5 is being supplied to the LLM for determining the sub-populations 3. The domain information data 5 may be indicative of events in the operation of the industrial process plant, wherein the several sub-populations 3 in the training data 2 are determined based on the training data 2 and the domain information data 5 using the LLM. For this purpose, the domain information data 5 may be fed into the LLM for identifying the sub-populations 3 of the industrial process plant. Consequently, as further shown in Fig. 5, it may be identified as described herein whether the sub-populations 3 determined thereby are underrepresented or not or underrepresented but enough, to then revise the model 1 using any technique described herein, including data augmentation as shown in Fig. 5 for re-training the model 1.

Generally, the domain information data 5 may metadata relating to e.g. different raw material, operating conditions, batches, classes, alarms and events etc. that may occur or be used in the industrial process plant. This information is usually available in unstructured format such as documents or structured sources such as databases/SAP/quality systems etc. The clusters or sub-populations 3 can be contextualized in one instance by providing e.g. documents and structured information of the domain information data 5 to the LLM, in particular a generative artificial intelligence, Al, model based on an LLM, to obtain relevant timestamps for different events from these information sources. Once the timestamps are retrieved, the LLM or generative Al model can be asked to generate a relevant python code to extract the data samples for these timestamps or alternatively create a plot for the data samples with relevant timestamp events, which can be referred to as domain clusters. The extracted dataset with the different events can be overlapped with the statistics from the clusters obtained in the previous step. A plot generation can help overlay the information from previous clusters in the form of the visualization and analysis.

Once all clusters or sub-populations 3 are obtained, they may be utilized to showcase different sub-populations 3 together with their events. One way to do so is to use the timestamps with the events from the clusters and plot them for example as line chart or scatterplot as shown in Fig. 2. The data from underrepresented sub-populations 3 or points where the model 1 doesn't perform good can be overlayed on the plot to relate these to the cluster timestamps. Statistical clusters can also be overlayed on this plot to give more insight into the reasons for lower model performance.

Generally, if a sub-population 3 is underrepresented, i.e. the model performance is low for the cluster, the number of samples can be checked. If the number of samples is high, it implies the model 1 is not able to effectively capture the sub-population 3, in which case, a different model/hyperparameters/strategy like ensembling might be selected for revising the model 1. If the number of samples is less, it is possible to augment the training data 2 with synthetic time series data using GANs or VAEs.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope of the claims.

## Claims

1. A computer-implemented method, comprising:
- obtaining training data (2) from an operation of an industrial process plant;
- training, using the training data (2), a machine learning model (1) for assisting a a plant operation of the industrial process plant;
- determining several sub-populations (3) in the training data (2), each one of the sub-populations (3) relating to a different scenario of an operation of the industrial process plant;
- determining several performances of the machine learning model (1), each one of the performances relating to a different sub-population (3);
- determining, based on the performance of each one of the sub-populations (3), one or more underrepresented sub-populations (4), which are underrepresented in the training data (2) compared to other sub-populations (3) in the several sub-populations (3); and
- revising, based on the one or more underrepresented sub-populations (4), the machine learning model (1) for increased consideration of the one or more underrepresented sub-populations (3) when assisting the plant operation of the industrial process plant.

2. The method of claim 1, wherein the training data (2) comprises time-series process data indicative of sensor readings from sensors of the industrial process plant.

3. The method of claim 2, wherein sub-populations (3) in the time-series process data are identified by applying one or more statistic techniques onto the time-series process data.

4. The method of claim 2 or 3, wherein the training data (2) further comprises domain information data (5) indicative of events in the operation of the industrial process plant, and/or the method comprises obtaining domain information data (5), wherein the several sub-populations (3) in the training data (2) are determined based on the training data (2) and the domain information data (5).

5. The method of claim 4, wherein the domain information data (5) is fed into one or more large language models, LLMs, for identifying sub-populations (3) of the industrial process plant.

6. The method of claim 5, wherein the several sub-populations (3) in the training data (2) are determined using the machine learning model (1) or another model, which overlays the the information from the identified sub-populations (3) determined based on the one or more statistic techniques and based on the one or more LLMs.

7. The method of any one of the previous claims, wherein the revising of the machine learning model (1) comprises:
- augmenting the training data (2) with synthetic training data for the one or more underrepresented sub-populations (4) and re-training the machine learning model (1) using the augmented training data (2);
- selecting a different machine learning model to be trained with the training data (2) for assisting the plant operation of the industrial process plant;
- adjusting one or more hyperparameters of the machine learning model (1) and re-training the machine learning model (1) with the adjusted one or more hyperparameters using the training data (2); and/or
- selecting a different learning algorithm for training the machine learning model (1) and re-training the machine learning model (1) with the different learning algorithm.

8. The method of claim 7, wherein the revising of the machine learning model (1) comprises the augmenting of the training data (2), if a number of samples in the one or more underrepresented sub-populations (3) is below a sample threshold.

9. The method of claim 8, wherein the revising of the machine learning model (1) comprises the selecting of a different machine learning model, the adjusting of one or more hyperparameters, and/or the selecting of a different learning algorithm, if a number of samples in the one or more underrepresented sub-populations (4) is above the sample threshold.

10. The method of any one of claims 7 to 9, wherein the synthetic training data is generated using a generative adversarial network, GAN, and/or a variational autoencoder, VAE.

11. The method of any one of the previous claims, wherein the determining of the one or more underrepresented sub-populations (4) comprises comparing the performances of each one of the sub-populations (3) to a performance threshold and selecting the sub-populations (3) with performances below the performance threshold as the one or more underrepresented sub-populations (4).

12. The method of any one of the previous claims, wherein the method further comprises:
- obtaining, by the machine learning model (1), input from a plant operator (100), the input being indicative of a false output from the machine learning model (1);
wherein the obtaining of the input triggers the determining of the several sub-populations (3) in the training data (2), the determining of the several performances of the machine learning model (1), the determining of the one or more underrepresented sub-populations (4), and/or the revising of the machine learning model (1).

13. One or more computer program products comprising instructions which, when executed by one or more computers (11), cause the one or more computers (11) to carry out the method of any one of the previous claims.

14. A data processing system configured to carry out the method of any one of claims 1 to 12.

15. A plant operation system (10) for an industrial process plant, the plant operation system (10) comprising the one or more computer program products of claim 13 or the data processing system of claim 14.
